# EUROPÄISCHE PATENTSCHRIFT

(11) **EP 1 058 020 B1**
(45) Veröffentlichungstag und Bekanntmachung des Hinweises auf die Patenterteilung: **04.10.2006**
(21) Anmeldenummer: 00107224.8
(22) Anmeldetag: 01.04.2000
(51) Int. Cl.: F16D 55/00

(54) **Bremssattel für eine Scheibenbremsanlage**
Brake caliper for a disc brake system
Etrier de frein pour système de frein à disque

(30) Priorität: 31.05.1999 DE 19925004
(43) Veröffentlichungstag der Anmeldung: 06.12.2000
(73) Patentinhaber: Dr.Ing. h.c.F. Porsche Aktiengesellschaft, 70435 Stuttgart (DE)
(72) Erfinder: Häsler, Karl, 70195 Stuttgart (DE); Meltzer, Gottfried, 01067 Dresden (DE); Thomas, Claus, 71686 Remseck-Pattonville (DE)

(56) Entgegenhaltungen:
- EP-A- 0 455 299
- EP-A- 0 737 823
- WO-A-97/31195
- DE-A- 3 736 126
- JP-A- 11 287 266
- PATENT ABSTRACTS OF JAPAN vol. 1996, no. 09, 30. September 1996 (1996-09-30) & JP 08 128469 A (HINO MOTORS LTD), 21. Mai 1996 (1996-05-21)
- PATENT ABSTRACTS OF JAPAN vol. 1998, no. 05, 30. April 1998 (1998-04-30) & JP 10 009298 A (AKEBONO BRAKE IND CO LTD), 13. Januar 1998 (1998-01-13)

## Beschreibung

Die Erfindung betrifft Maßnahmen an einem Bremssattel zur Reduzierung des Bremsenquietschens für eine Scheibenbremsanlage.

Die als Bremsenquietschen bekannte Geräuschentwicklung eines Bremssystemes beruht auf einer Schwingung der Systemkomponenten Bremssattel und Bremsscheibe, die im gebremsten Zustand über die Bremsbeläge direkt miteinander gekoppelt sind. Von Einfluss sind ferner der Radträger, an dem der Bremssattel befestigt ist, sowie Achse und Aufnahme der Bremsscheibe. Bremsenquietschen ist im Betrieb des Fahrzeuges aufgrund der Tonhöhe ein sehr störendes Geräusch, das unter allen Umständen vermieden werden sollte. Aus der DE 37 36 126 A1 ist eine Bremsvorrichtung bekannt, welche am Bremssattel einen Tilger aufweist, der eine bei einer Quietschgeräusche erzeugenden Eigenfrequenz der Bremseinrichtung eine in Resonanz mit dem oszillierenden Bremssattel liegende Dimensionierung aufweist, wobei der Tilger vorzugsweise am Bremssattel im Bereich seines größten Schwingungsausschlages angeordnet ist. Des Weiteren ist aus der WO 97/31195 eine Festsattelbremse bekannt, bei der zur Reduzierung von Bremsgeräuschen die Materialsteifigkeit an geeigneten Stellen des Bremsgehäuses wie auch der Bremsbelege gesenkt wird, um gedämpft schwingfähige Teilsysteme an der Bremse zu schaffen. Ferner ist aus der JP 08 128469 A ein Bremssattel bekannt, welcher am Bremssattel ein Gewicht aufweist, welches unter Zwischenschaltung eines elastischen Körpers mit dem Bremssattel verbunden ist. Durch dieses elastisch am Bremssattel gehaltene Gewicht wird eine Schwingungsverminderung vorgenommen. Aus der EP 0 455 299 A1 ist des Weiteren ein Schwimmsattel bekannt, der an seiner Außenseite ein elastisch gelagertes Gewicht aufweist, das zur Dämpfung von Vibrationen des Bremssattels dient.

Es ist daher Aufgabe der Erfindung, kostengünstige Maßnahmen zur wirkungsvollen Unterdrückung des Bremsenquietschens aufzuzeigen.

Diese Aufgabe wird erfindungsgemäß mit den Merkmalen des Anspruchs gelöst.

Die Erfindung geht dabei von der Erkenntnis aus, dass das Bremsenquietschen bei einer bestimmten Tonhöhe, hier im Frequenzbereich von ca. 2 kHz, aus einer Überlagerung von Schwingungsbildern herrührt. Die Schwingungsbilder von Bremssattel und Bremsscheibe überlagern sich hierbei und führen aufgrund von Selbsterregung zu einer anfachenden, d.h. stets ansteigenden Schwingung. Die maximale Schwingungsamplitude ist erreicht, wenn die Eigendämpfung des Gesamtsystemes ein weiteres Ansteigen der Schwingungsamplitude verhindert.

Ferner wurde erkannt, dass diese Überlagerung der Schwingungsbilder bei jedem Bremsvorgang auftreten kann und unabhängig vom Verschleißzustand der beteiligten Bremsenbauteile ist. Ferner wurde im vorliegenden Bremssystem erkannt, dass die Eigenfrequenz der Bremsscheibe z.B. vom Bremsdruck als Betriebsparameter abhängig ist, während die Eigenfrequenz des Bremssattels über den Bremsdruck weitgehend konstant bleibt. Weiterhin in Betracht ziehend, dass Maßnahmen an der Bremsscheibe aufgrund der dort herrschenden Platzverhältnisse sowie thermischen und mechanischen Beanspruchungen nur schwer durchführbar sind, betreffen die aus den vorgenannten Erkenntnissen abgeleiteten Maßnahmen zur Verminderung des Bremsenquietschens den Bremssattel.

So ist es aus der EP 0 737 823 A1 bekannt, den Bremssattel so auszulegen, dass ein Bereich der Eigenfrequenzen des Bremssattels im eingebauten und gebremsten Zustand im wesentlichen außerhalb des Bereiches der Eigenfrequenzen der Bremsscheibe liegt, d.h. dass sich die Eigenfrequenzen in ihrem Verlauf über den gewählten Betriebsparameter, vorzugsweise den Bremsdruck, nicht überschneiden. Der Bereich der Eigenfrequenzen ergibt sich hierbei durch den Verlauf der Eigenfrequenz der Bremsscheibe bzw. des Bremssattels über den gewählten Betriebsparameter.

In Ausbildung der Erfindung wird vorgeschlagen, zur Auslegung der Eigenfrequenz des Bremssattels den Bereich der Eigenfrequenzen des Bremssattels oberhalb des Bereiches der Eigenfrequenzen der Bremsscheibe zu legen, indem die Steifigkeit des Bremssattels erhöht und/oder die Masse im Bereich erhöhter Schwingungsamplitude des Bremssattels vermindert wird. Vorteilhafter Weise wird die Steifigkeit des Bremssattels vor allem im Bereich zwischen Stegen und Wangen des Bremssattels erhöht, da dieser Übergang im Schwingungsbild des Bremssattels ähnlich wie ein Gelenk wirkt und damit die für die schwingungstechnische Auslegung wesentliche Steifigkeit wirkungsvoll erhöht.

Alternativ kann der Bereich der Eigenfrequenzen des Bremssattels auch soweit vermindert werden, dass er unterhalb des Bereiches der Eigenfrequenzen der Bremsscheibe zu liegen kommt. Die Eigenfrequenz der Bremsscheibe hat bei einem Bremsdruck von Null jedoch einen endlichen Wert, so dass eine solche Auslegung des Bereiches der Eigenfrequenzen des Bremssattels möglich ist. Zum Vermindern des Bereiches der Eigenfrequenzen des Bremssattels wird vorgeschlagen, die Steifigkeit des Bremssattels zu vermindern und/oder die Masse im Bereich der größten Schwingungsamplitude zu erhöhen. Auch hier kann die Steifigkeit am wirkungsvollsten wieder im Übergangsbereich zwischen den Wangen und den Stegen des Bremssattels beeinflusst werden.

Die Erfindung ist nachstehend anhand des in den Figuren dargestellten Ausführungsbeispieles näher erläutert.

Es zeigen:
Fig. 1 Schwingungsformen des Bremssattels und der Bremsscheibe,
Fig. 2 Frequenzverläufe von Eigenfrequenzen einer bremsscheibengeprägten Schwingungsform sowie einer bremssattelgeprägten Schwingungsform über einem Bremsdruck, und
Fig. 3 eine schematische Darstellung einer Anordnung von Dämpfungspaketen an einem Bremssattel.

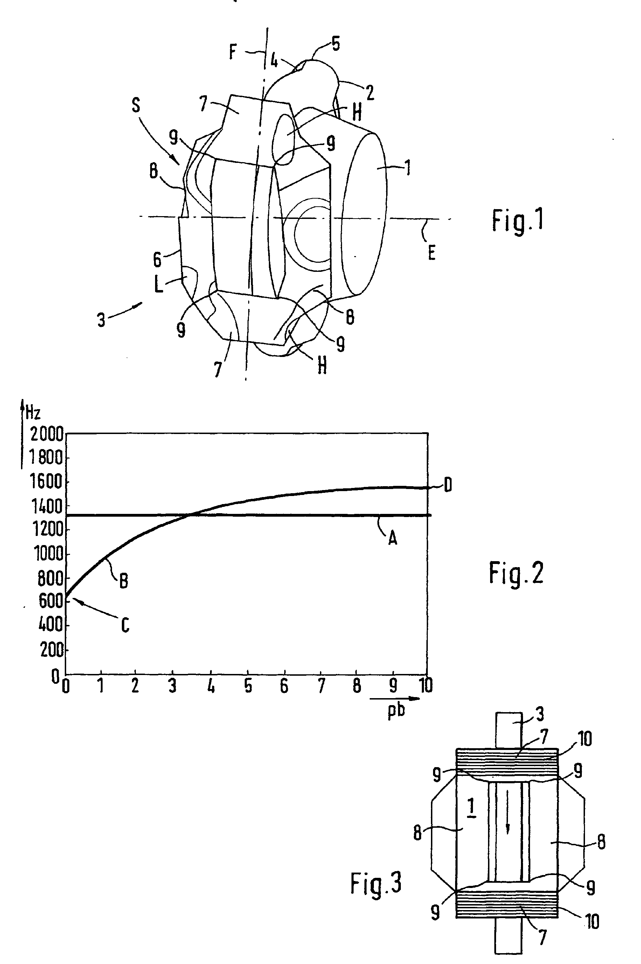

Fig. 1 zeigt einen Bremssattel 1 und eine Bremsscheibe 2 einer Festsattel-Bremsanlage 3. Die Anbindung des Festsattel-Bremssattels 1 und der Bremsscheibe 2 an einem nicht gezeigten Radträger sind an sich bekannt und daher zur Vereinfachung nicht dargestellt. Wie in der überhöhten Darstellung nach Fig. 1 zu erkennen ist, weist die Bremsscheibe 2 ein Schwingungsbild auf, bei dem sich auf der sich drehenden Bremsscheibe 2 in Umfangsrichtung raumfest stehende Schwingungsberge 4 und Schwingungsknoten 5 bilden.

Die Schwingungsform des Bremssattels 1 ist abhängig von seiner Bauart; bei der hier gezeigten Festsattel-Bremsanlage 3 schwingt der Bremssattel 1 in einem Bereich L nahe einer Auflagefläche 6 an den Radträger kaum und die größten Schwingungsamplituden ergeben sich in Bereichen H an Übergangsbereichen 9 des Bremssattels, die die beiden Wangen 8 des Bremssattels 1 miteinander verbinden. Vereinfacht dargestellt wirken hierbei Übergangsbereiche 9 zwischen den Stegen 7 und den Wangen 8 als Gelenke. Insgesamt ergibt sich eine Schwingungsform des Bremssattels 1, die sich ungefähr als eine Überlagerung einer Torsionsbewegung um eine Achse E parallel zu einer Radachse und einer Torsionsbewegung um eine Achse F tangential zur Bremsscheibe 2 beschreiben lässt.

Wie aus den Frequenzverläufen nach Fig. 2 deutlich zu entnehmen ist, ist die Eigenfrequenz A der Schwingungsform des Bremssattels 1 weitgehend unabhängig von der Höhe eines Bremsdruckes pb, während eine Eigenfrequenz B der Schwingungsform der Bremsscheibe 2 ausgehend von einem Grenzwert C mit steigendem Bremsdruck pb auf einen Maximalwert D ansteigt. Wichtig ist, dass der untere Grenzwert C bei einem Bremsdruck pb mit dem Wert 0 einen endlichen Wert > 0 Hz besitzt. Derartige Verläufe ergeben sich nicht nur für den Bremsdruck, sondern auch für andere Betriebsparameter wie z.B. Steigungänderungen im Reibwertverlauf eine (nicht gezeigten) Bremsbelages, hervorgerufen durch Temperaturänderungen während einer Bremsung.

Zur Abstimmung der Eigenfrequenz des Bremssattels 1 ist zunächst durch Versuch oder Berechnung der Verlauf der Kurve B für die Eigenfrequenz der Bremsscheibe 2 zu bestimmen. Danach erfolgt die Auslegung des Bremssattels 2. Nachdem dieser zunächst festigkeitsmäßig grob berechnet ist, kann der Verlauf A seiner Eigenfrequenzen bestimmt werden. Nun ist zu entscheiden, ob versucht werden soll, den Verlauf A der Eigenfrequenzen unter oder über den Verlaufes B der Eigenfrequenz der Bremsscheibe 2 zu legen.

Soll der Verlauf A der Eigenfrequenzen des Bremssattels 1 angehoben werden, so wird zunächst zu versuchen sein, die Eigenfrequenzen durch Verstärken der Bereiche 9 anzuheben. Dies kann beispielsweise dadurch geschehen, daß die Bereiche 9 zusätzliche Rippen erhalten. Soll der Verlauf A der Eigenfrequenzen hingegen abgesenkt werden, so wird zunächst zu versuchen sein, dies durch eine Erhöhung der Masse in den Übergangsbereichen 9, die hier die größte Schwingungsamplitude aufweisen, zu erreichen. Beim gezeigten Bremssattel weisen die einer Aufspannfläche S des Bremssattels 1 abgewandten Übergangsbereichen 9 die größten Schwingungsamplituden auf, so daß im vorliegenden Fall eine asymmetrische Verteilung der zusätzlichen Massen sinnvoll ist. Aus Platzgründen kann es auch notwendig sein, die zusätzlichen Massen im Bereich der Stege 7 anzuordnen. Selbstverständlich hat auch die Wahl des Materials für den Bremssattel 1 einen erheblichen Einfluß auf die Eigenfrequenz, so daß eine Veränderung der Eigenfrequenz auch durch Veränderung des Materials bzw. der Materialzusammensetzung erreicht werden kann.

Es hat sich als vorteilhaft erwiesen, den Verlauf A der Eigenfrequenzen des Bremssattels 1 so zu gestalten, daß jeweils ein Abstand von zumindest ca. 500 Hz zum Verlauf B der Eigenfrequenzen der Bremsscheibe eingehalten wurde.

Sollten die vorgenannten Maßnahmen zur Minderung des Bremsenquietschens oder eine Überarbeitung des Bremssattels 1 nicht möglich sein, so ist es alternativ möglich, wie in Fig. 3 dargestellt, am Bremssattel 1 Dämpfungspakete 10 anzuordnen. Auch diese Dämpfungspakete sind im Bereich der größten Schwingungsamplitude bzw. der größten Relativbewegung an einer Anlagefläche des Bremssattels 1 an diesem anzuordnen. Hier sind die beiden Dämpfungspakete 10 aus Platzgründen an den Stegen 7 angeordnet; optimal aber wäre eine Anordnung an den Übergangsbereichen 9. Die Dämpfungspakete 10 bestehen aus abwechselnden Schichten von Gummi (oder einem anderen, gut dämpfenden Material) und Metall, wobei die unterste, unmittelbar auf dem Bremssattel 1 aufliegende Schicht eine Gummischicht ist. Wichtig ist, daß bei der Anordnung der Dämpfungspakete 10 diese durch Verschrauben oder ähnliches mit dem Bremssattel 1 fest verbunden sind, damit die Dämpfungspakete 10 an die Schwingungen des Bremssattels 1 angekoppelt sind und diese wirkungsvoll bedämpfen können.

Bei dieser Anordnung wäre es optimal, wenn der Verlauf A der Eigenfrequenzen des Bremssattels 1 mit dem Verlauf B der Eigenfrequenzen der Bremsscheibe 2 übereinstimmt, da in diesem Falle die schwingungstechnische Ankopplung der Bremsscheibe 2 über den Bramssattel 1 an die Dämpfungspakete 10 und damit auch die Bedämpfung der Bremsscheibe 2 besonders gut ist. Zu den Möglichkeiten der Veränderung der Eigenfrequenzen, hier aber im Sinne einer Übereinstimmung der Verläufe A und B, kann auf die obenstehenden Beispiele verwiesen werden.

Die vorgenannten Maßnahmen und Schwingungsbilder gelten insbesondere für einen als Festsattel ausgebildeten Bremssattel 1. Auch andere Formen von Bremsanlagen 3 sind diesen Maßnahmen entsprechend unter Berücksichtigung der veränderten Schwingungsformen anwendbar.

## Patentansprüche

1. Bremssattel für eine Scheibenbremsanlage, wobei ein Bereich der Eigenfrequenz (A) des Bremssattels im eingebauten Zustand im Wesentlichen außerhalb eines Bereiches der Eigenfrequenz (B) einer Bremsscheibe liegt, **dadurch gekennzeichnet, dass** die Steifigkeit des Bremssattels (1) in einem Übergangsbereich (9) zwischen Wangen (8) und den Stegen (7) des Bremssattels erhöht oder vermindert wird.

## Claims

1. A brake calliper for a disc brake system, wherein a range of the natural frequency (A) of the brake calliper in the mounted state lies substantially outside a range of the natural frequency (B) of a brake disc, **characterised in that** the rigidity of the brake calliper (1) is increased or reduced in a transition region (9) between side walls (8) and the crosspieces (7) of the brake calliper.

## Revendications

1. Étrier de frein pour un système de frein à disque, une zone de la fréquence de résonance (A) de l'étrier de frein à l'état monté se situant sensiblement en dehors d'une zone de la fréquence de résonance (B) d'un disque de frein, **caractérisé en ce que** la rigidité de l'étrier de frein (1) est augmentée ou diminuée dans une zone de transition (9) entre les joues (8) et les entretoises (7) de l'étrier de frein.
